## Europäisches Patentamt
## European Patent Office
## Office européen des brevets

(11) Veröffentlichungsnummer: **0 093 295**
**B1**

(12) **EUROPÄISCHE PATENTSCHRIFT**

(45) Veröffentlichungstag der Patentschrift:
**04.12.85**

(21) Anmeldenummer: **83103626.4**

(22) Anmeldetag: **14.04.83**

(51) Int. Cl.⁴: **B 60 R 25/02**

(54) Vorrichtung zum Sperren der Drehbewegung einer Lenkspindel eines Kraftfahrzeuges.

Verbunden mit 83901195.4/0108078 (europäische Anmeldenummer/Veröffentlichungsnummer) durch Entscheidung vom 21.02.85.

(30) Priorität: **30.04.82 DE 3216168**

(43) Veröffentlichungstag der Anmeldung:
**09.11.83 Patentblatt 83/45**

(45) Bekanntmachung des Hinweises auf die Patenterteilung:
**04.12.85 Patentblatt 85/49**

(84) Benannte Vertragsstaaten:
**DE FR GB IT**

(56) Entgegenhaltungen:
**FR - A - 2 118 265**
**FR - A - 2 456 644**

(73) Patentinhaber: **NEIMAN S.A., 39, Avenue Marceau, F-92400 Courbevoie (FR)**

(72) Erfinder: **Weber, Günter, Bergerheide 54, D-5600 Wuppertal 1 (DE)**

(74) Vertreter: **Patentanwaltsbüro Cohausz & Florack, Postfach 14 01 47, D-4000 Düsseldorf 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Vorrichtung zum Sperren der Drehbewegung der Lenkspindel eines Kraftfahrzeugs durch ein Klemmgesperre mit achsparallelen Rollen, die zwischen einer zylindrischen Laufbahn und zur Laufbahn schrägen Klemmflächen die Lenkspindel in beiden Drehrichtungen festklemmen und in einem um die Lenkspindel verdrehbaren koaxialen Käfig geführt sind, der durch die Lenkspindel in beiden Drehrichtungen jeweils in eine der beiden Klemmstellungen mitschleppbar und in einer zwischen beiden Klemmstellungen liegenden Mittelstellung feststellbar ist, in der die Rollen die Lenkspindel freigeben.

Eine derartige Sperrvorrichtung ist aus der FR-A-2 456 644 bekannt. Bei dieser Vorrichtung nimmt der Käfig, wenn er nicht festgestellt ist, unterschiedliche Stellungen ein, da der Reibschluß zwischen Lenkspindel und Käfig keinen gleichbleibenden Wert hat. Insbesondere durch Temperaturdifferenzen ändert sich der Reibschluß erheblich.

Aufgabe der Erfindung ist es, eine Vorrichtung der eingangs genannten Art derart zu verbessern, daß eine gleichmäßige exakte Mitnahme des Käfigs durch die Spindel erreicht wird.

Diese Aufgabe wird erfindungsgemäß dadurch gelöst, daß alle Rollen außen von mindestens einem zur Spindel koaxialen, elastischen Ring umgeben sind, der die Rollen zur Lenkspindel hin federnd beaufschlagt.

Der erfindungsgemäße elastische Ring drückt die Rollen stets mit gleicher Kraft gegen die Lenkspindel, so daß ein exakter und ständig gleichmäßiger Reibschluß zwischen Käfig und Spindel gewährleistet ist. Damit sind die Stellungen des Käfigs auf der Spindel genau bestimmt.

Die Vorrichtung baut in axialer und radialer Richtung sehr klein, ist einfach und preiswert in der Herstellung und leicht zu montieren.

Besonders preiswert und platzsparend ist der Ring dann, wenn er aus Gummi oder elastischem Kunststoff besteht. Eine konstruktiv sehr einfache Ausführung wird dadurch geschaffen, daß die Rollen über die Käfigaußenseite vorstehen und der Ring über der Käfigaußenseite liegt. Dabei können Käfigaußenseite und Ring noch von einem weiteren Käfigteil außen umgeben sein.

Eine sehr gleichmäßige Druckbeaufschlagung wird dann erreicht, wenn zu beiden Seiten eines äußeren, die Klemmflächen aufweisenden, feststehenden Klemmringes je ein elastischer Ring angeordnet ist.

Von Bedeutung ist es, daß der Käfig zwischen den beiden Klemmstellungen in einer Mittelstellung arretierbar ist, so daß während der Fahrt ein Festklemmen der Lenkspindel mit Sicherheit vermieden wird. Hierzu wird in der FR-A-2 456 644 vorgeschlagen, einen Bolzen in eine Ausnehmung des Käfigs einzubringen. Dieser Bolzen gelangt in diese Ausnehmung aber nur dann, wenn die Ausnehmung mit dem Bolzen fluchtet, so daß die Lenkspindel durch das Lenkrad so lange hin- und herbewegt werden muß, bis dieser Zustand eintritt.

Hiergegen wird bei der bevorzugten erfindungsgemäßen Vorrichtung vorgeschlagen, daß der Käfig außen einen Vorsprung aufweist, der durch ein vom Lenkschloß gesteuertes Teil in eine Stellung zu bringen und arretierbar ist, in der der Käfig nicht sperrt. Damit erzeugt das Teil, das den Käfig arretiert, gleichzeitig auch die Lage des Käfigs, in der dieser nicht sperrt.

Vorzugsweise wird vorgeschlagen, daß ein vom Lenkschloß gesteuertes Teil den Käfig durch ein insbesondere doppeltes Keilgetriebe in die nicht klemmende Stellung stellt. Hierdurch wird eine besonders einfache und sichere Konstruktion geschaffen. Ferner wird vorgeschlagen, daß der Käfigvorsprung oder das vom Lenkschloß gesteuerte Teil eine Ausnehmung mit zwei Keilflächen aufweist, in die ein Keil oder ein gewölbter Vorsprung, insbesondere eine Kugel, des vom Lenkschloß gesteuerten Teils oder des Käfigvorsprungs zentrierend eingreift.

Ein Ausführungsbeispiel der Erfindung ist in den Zeichnungen dargestellt und wird im folgenden näher beschrieben. Es zeigt

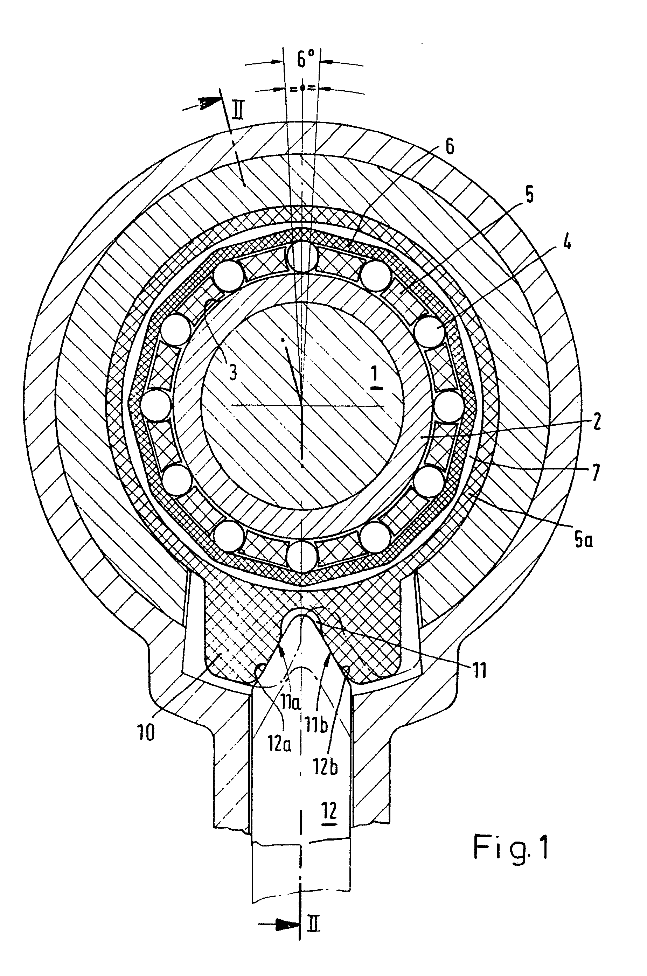

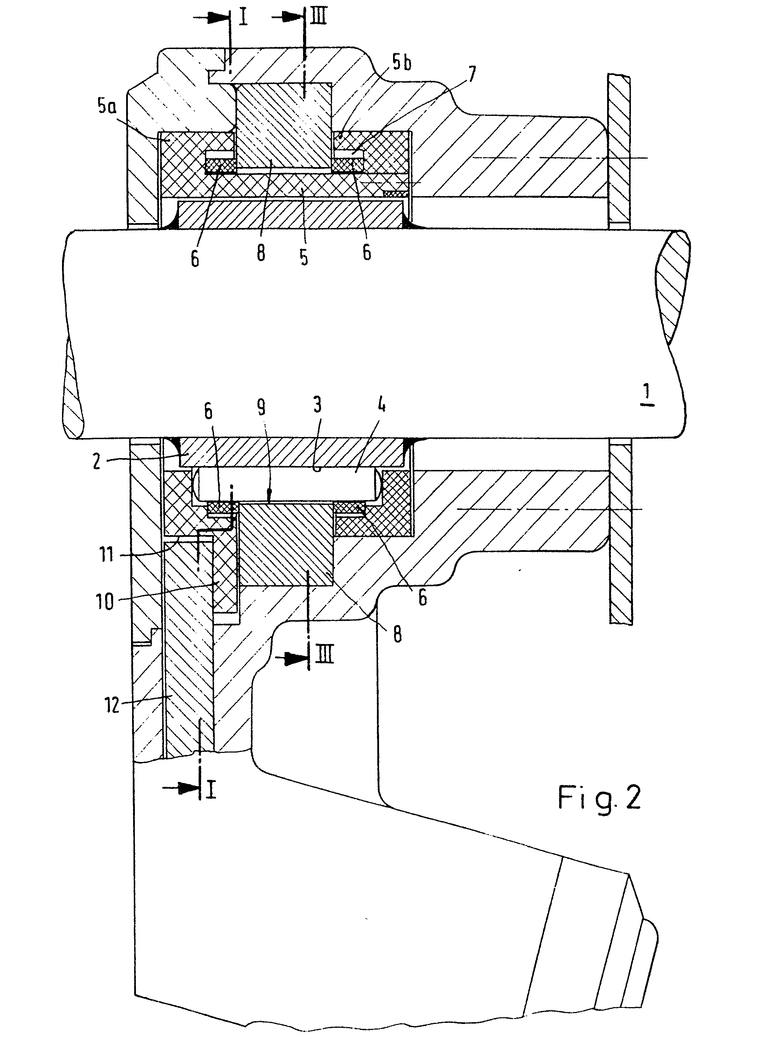

Fig. 1 einen Schnitt durch die Vorrichtung quer zur Lenksäule in Höhe eines elastischen Ringes (Schnitt nach I-I in Fig. 2),

Fig. 2 einen Schnitt nach II-II in Fig. 1 und

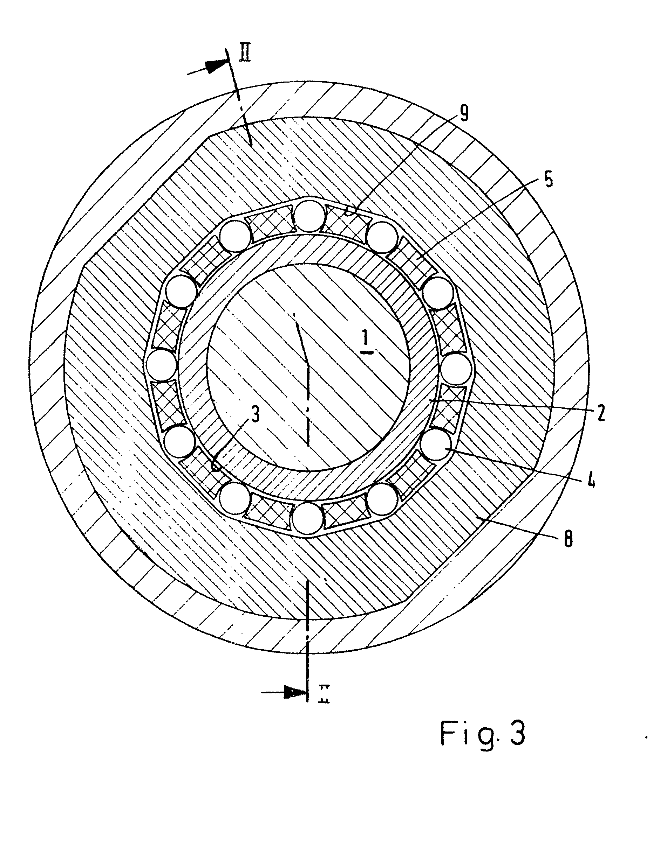

Fig. 3 einen Schnitt nach III-III in Fig. 2.

Auf der Lenkspindel 1 eines Kraftfahrzeugs ist drehfest eine Buchse 2 befestigt. Der Außenmantel der Buchse 2 bildet eine zylindrische Laufbahn 3 für zylindrische Rollen 4, die achsparallel zur Drehachse der Lenkspindel 1 liegen und regelmäßig um die Buchse 2 in einem Käfig 5 gelagert sind. Alternativ kann die Buchse 2 entfallen und der Mantel der Lenkspindel 1 die Laufbahn für die Rollen bilden.

Der Käfig 5 ist außen von zwei elastischen Ringen 6 umgeben, die auf den Rollen 4 aufliegen und diese zur Lenkspindel 1 hin radial belasten. Diese Radialbelastung wird dadurch ermöglicht, daß die zwischen den Rollen 4 liegenden Abschnitte des Käfigs 5 in radialer Richtung eine geringere Dicke aufweisen als die Durchmesser der Rollen 4.

Der Käfig 5 ist von einem ringförmigen Käfigteil 5a, 5b koaxial im Abstand zum Käfig 5 umgeben, so daß in dem einen Ringraum 7 bildenden Abstand die elastischen Ringe 6 einliegen können. Dieser äußere Käfigteil ist in einen ringförmigen ersten Teil 5a aufgeteilt, der am Käfig 5 angeformt ist und in einen zweiten Teil 5b, der von der Stirnseite her auf den Käfig 5 aufgesetzt wird. Zwischen den Teilen 5a und 5b besteht ein ringnutenförmiger Abstand, in dem ein Klemmring 8 koaxial einliegt. Der Klemmring 8 reicht von außen in den Käfig 5 zwischen den beiden elastischen Ringen 6 so weit hinein, daß an seiner Innenwandung die Rollen 4 klemmend zur Anlage gelangen können. Hierzu bildet die Innenwandung gerade oder gebogene Ausnehmungen bzw. schräge, gerade oder gebogene Klemmflächen 9, die bei der in den Figuren gezeigten Mittelstellung des Käfigs 5 ausreichend Platz für die Rollen lassen und bei einem Drehen des Käfigs in beide Drehrichtungen die Rollen zwischen dem drehfesten Klemmring 8 und der Laufbahn 3 verklemmen lassen.

Am Käfigteil 5a ist ein radialer Vorsprung 10 angeformt, der an seiner Außenseite eine keilförmige Ausnehmung 11 besitzt, die klappsymmetrisch zu einem Radius der Lenkspindel zwei schräge Keilflächen 11a und 11b seitlich bildet. In die Ausnehmung 11 ist ein von einem nicht gezeigten Lenkschloß betätigter Bolzen 12 einfahrbar, der an seinem der Lenkspindel 1 zugewandten Ende zwei Keilflächen 12a, 12b besitzt, die bei einer Mittelstellung des Käfigs 5 parallel zu den Flächen 11a und 11b liegen. Der Bolzen 12 kann auch achsparallel zur Lenkspindel angeordnet und in Längsrichtung beweglich sein, wobei dann die Ausnehmung 11 um 90° gedreht im Vorsprung 10 angeordnet sein muß. Zwischen der radialen und achsparallelen Stellung des Bolzens sind auch Zwischenstellungen möglich.

Wenn der Bolzen 12 mit seiner der Lenkspindel zugewandten Spitze in die Ausnehmung 11 eingreift, ist der Käfig 5 in seiner Mittelstellung blockiert, so daß die Lenkspindel 1 sich frei drehen kann, ohne durch die Rollen 4 festgeklemmt zu werden. Diese Stellung erreicht der Bolzen 12 nur dann, wenn der Schlüssel in das Lenkschloß eingesteckt ist und durch Drehen des Zylinderkerns der Bolzen 12 in diese Lage geschoben wurde. Bei abgezogenem Schlüssel gelangt der Bolzen zumindest teilweise aus der Ausnehmung 11 heraus, so daß sich der Käfig begrenzt in beide Drehrichtungen bewegen kann. Aufgrund der durch die elastischen Ringe 6 erzeugten Reibung wird bei Drehen der Lenkspindel 1 der Käfig 5 in dieselbe Drehrichtung so weit mitgenommen, bis die Rollen zwischen den Klemmflächen 9 und der Laufbahn 3 sich verklemmen und damit ein weiteres Drehen der Lenkspindel verhindern. Um diese radial nach außen wirkenden, durch die Rollen erzeugten Kräfte aufzunehmen, ist der Klemmring 8 aus einem sehr widerstandsfähigen Stahl hergestellt.

Der Drehwinkel zwischen den beiden Klemmstellungen des Käfigs beträgt nur 6°. In beiden Klemmstellungen des Käfigs 5 ist die Ausnehmung 11 gegenüber der Spitze des Bolzens 12 nur so weit verdreht, daß die Bolzenspitze immer noch zum Teil in die Ausnehmung eindringen kann und eine Keilfläche des Bolzens an einer Keilfläche der Ausnehmung zur Anlage gelangt, so daß ein weiteres Einschieben des Bolzens 12 in die Ausnehmung 11 eine Bewegung des Käfigs aufgrund des Keilgetriebes zur Mittelstellung hin erzeugt.

Die Betätigung des Sperrbolzens erfolgt in umgekehrter Funktionsweise wie beim derzeitigen Lenkschloßsystem: Durch Drehung des Zylinderkerns mittels Schlüssel in Öffnungsrichtung wird der Sperrbolzen formschlüssig in den Käfig gefahren und hält diesen in Mittelstellung. Diese Stellung wird beibehalten, bis durch Rückdrehen und Abziehen des Schlüssels eine federnde Rückstellung des Sperrbolzens erfolgt. Durch Ausweichen des Käfigs um je 3° aus der Mittellage wird die Lenkung blockiert.

## Patentansprüche

1. Vorrichtung zum Sperren der Drehbewegung der Lenkspindel (1) eines Kraftfahrzeugs durch ein Klemmgesperre mit achsparallelen Rollen (4), die zwischen einer zylindrischen Laufbahn (3) und zur Laufbahn schrägen Klemmflächen (9) die Lenkspindel (1) in beiden Drehrichtungen festklemmen und in einem um die Lenkspindel (1) verdrehbaren koaxialen Käfig (5) geführt sind, der durch die Lenkspindel (1) in beiden Drehrichtungen jeweils in eine der beiden Klemmstellungen mitschleppbar und in einer zwischen beiden Klemmstellungen liegenden Mittelstellung feststellbar ist, in der die Rollen (4) die Lenkspindel (1) freigeben, dadurch gekennzeichnet, daß alle Rollen (4) außen von mindestens einem zur Spindel (1) koaxialen elastischen Ring (6) umgeben sind, der die Rollen zur Lenkspindel hin federnd beaufschlagt.

2. Vorrichtung nach Anspruch 1, dadurch gekennzeichnet, daß der Ring (6) aus Gummi oder elastischem Kunststoff besteht.

3. Vorrichtung nach Anspruch 1 oder 2, dadurch gekennzeichnet, daß die Rollen (4) über die Käfigaußenseite vorstehen und der Ring (6) über der Käfigaußenseite liegt.

4. Vorrichtung nach einem der Ansprüche 1 bis 3, dadurch gekennzeichnet, daß zu beiden Seiten eines äußeren, die Klemmflächen (9) aufweisenden, feststehenden Klemmringes (8) je ein elastischer Ring (6) angeordnet ist.

5. Vorrichtung nach einem der Ansprüche 1 bis 4, dadurch gekennzeichnet, daß der Käfig (5) außen einen Vorsprung (10) aufweist, der durch einen vom Lenkschloß gesteuerten Bolzen (12) in eine Stellung zu bringen und arretierbar ist, in der der Käfig nicht sperrt.

6. Vorrichtung nach einem der Ansprüche 1 bis 5, dadurch gekennzeichnet, daß ein vom Lenkschloß gesteuerter Bolzen (12) den Käfig (5) durch ein insbesondere doppeltes Keilgetriebe in die nicht klemmende Stellung stellt.

7. Vorrichtung nach Anspruch 5 oder 6, dadurch gekennzeichnet, daß der Käfigvorsprung (10) oder der vom Lenkschloß gesteuerte Bolzen (12) eine Ausnehmung (11) mit zwei Keilflächen (11a, 11b) aufweist, in die ein Keil (12a, 12b) oder ein gewölbter Vorsprung, insbesondere eine Kugel des vom Lenkschloß gesteuerten Teils (12) oder des Käfigvorsprungs zentrierend eingreift.

## Claims

1. Device for locking the rotation of the steering-wheel spindle (1) of a motor vehicle by a clamp locking system (ratchet brake system?)

with paraxial rollers (4), which clamp the steering-wheel spindle (1), in both directions of rotation, between a cylindrical traject (3) and clamping surfaces (9) oblique in respect of the said traject, and which are guided in a coaxial cage (5) which is rotatable about the steering-wheel spindle (1) and which can be entrained by the steering-wheel spindle (1) in one of the two locking positions in each of the two directions of rotation and which can be locked in anintermediate position between the two locking positions, in which intermediate position the rollers (4) release the steering-wheel spindle (1), characterized by the fact that all the rollers (4) are surrounded on the outside by at least one elastic ring which is coaxial with the spindle (1) and which resiliently stress the rollers towards the steering-wheel spindle.

2. Device in accordance with Claim 1, characterized by the fact that the ring (6) consists of rubber or an elastic plastic.

3. Device in accordance with Claim 1 or 2, characterized by the fact that the rollers (4) project beyond the outside of the cage and that the ring (6) is situated above the outside of the cage.

4. Device in accordance with one of Claims 1—3, characterized by the fact that one elastic ring (6) is situated on each of the two sides of an outer locking ring (8) which is fixed in position and which is provided with the clamping surfaces (9).

5. Device in accordance with one of Claims 1—4, characterized by the fact that the cage (5) has an external projection (10) which, by means of a bolt (12) controlled by the steering lock, can be moved into and secured in a position in which the cage does not lock.

6. Device in accordance with one of Claims 1—5, characterized by the fact that a bolt (12) controlled by the steering lock moves the cage (5), by means of a wedge-type gearing, particularly a double wedge-type gearing, into the non-locking position.

7. Device in accordance with Claim 5 or 6, characterized by the projection (10) of the cage of the bolt (12) controlled by the steering lock has a recess (11) with two wedge surfaces 11a, 11b, engaged, with a centering effect, by a wedge (12a, 12b), or by a convex projection, particularly a ball, of the part (12) controlled by the steering lock or of the cage projection.

**Revendications**

1. Dispositif pour bloquer la rotation de l'arbre de direction d'un véhicule automobile par un encliquetage par serrage avec des rouleaux à axes parallèles qui serrent, entre une voie de roulement cylindrique et des surfaces de serrage obliques par rapport à la voie de roulement, l'arbre de direction dans les deux sens de rotation, et qui sont guidés dans une cage pivotant coaxialement autour de l'arbre de direction, qui peut être entraînée par l'arbre de direction dans les deux sens de rotation à chaque fois dans une des deux positions de serrage et être fixée en une position médiane entre les deux positions de serrage, dans laquelle les rouleaux libèrent l'arbre de direction, caractérisé en ce que tous les rouleaux (4) sont entourés extérieurement par au moins une bague élastique (6) coaxiale à l'arbre (1) qui rappelle élastiquement les rouleaux vers l'arbre de direction.

2. Dispositif selon la revendication 1, caractérisé en ce que la bague (6) est constituée en caoutchouc ou en matière synthétique élastique.

3. Dispositif selon la revendication 1 ou 2, caractérisé en ce que les rouleaux (4) sont en saillie au-delà du bord extérieur de la cage et la bague (6) se trouve au-delà du bord extérieur de la cage.

4. Dispositif selon l'une des revendications 1 à 3, caractérisé en ce qu'une bague elastique (6) est disposée de chaque côté d'une bague de serrage (8) fixe présentant les surfaces de serrage (9).

5. Dispositif selon l'une des revendications 1 à 4, caractérisé en ce que la cage (5) présente extérieurement une saillie (10) qui peut être amenée et arrêtée, par un pêne (12) commandé par le verrou de direction, en une position dans laquelle la cage ne serre pas.

6. Dispositif selon l'une des revendications 1 à 5, caractérisé en ce qu'un pêne (12) commandé par le verrou de direction amène la cage (5) en position de non serrage au moyen d'un engrenage à coin, en particulier double.

7. Dispositif selon la revendication 5 ou 6, caractérisé en ce que la saillie (10) de la cage ou le pêne (12) commandé par le verrou de direction, présente un évidement (11) avec deux surfaces en coin (11a, 11b) dans lequel pénètre avec centrage un coin (12a, 12b) ou une saillie courbe, en particulier une bille, de la partie (12) commandée par le verrou de direction ou de la saillie de la cage.

Fig.1

0 093 295

Fig. 2

Fig. 3